# EUROPÄISCHE PATENTSCHRIFT

(11) **EP 3 482 889 B1**
(45) Veröffentlichungstag und Bekanntmachung des Hinweises auf die Patenterteilung: **28.12.2022**
(21) Anmeldenummer: 18204053.5
(22) Anmeldetag: 02.11.2018
(51) Int. Cl.: B25J 13/08, B25J 15/02, B25J 19/02, B25J 15/08

(54) **GREIFZANGE**
GRASPING FORCEPS
PINCE DE PRÉHENSION

(30) Priorität: 13.11.2017 DE 102017126564
(43) Veröffentlichungstag der Anmeldung: 15.05.2019
(73) Patentinhaber: FIPA Holding GmbH, 85737 Ismaning (DE)
(72) Erfinder: SCHANZ, Henning, 82205 Gilching (DE); BLOMEYER, Niels, 82319 Starnberg (DE)
(74) Vertreter: Trinks, Ole

(56) Entgegenhaltungen:
- EP-A1- 0 158 593
- DE-A1-102005 003 492
- US-A- 4 682 805
- US-A- 4 697 246
- US-A- 4 906 926
- US-A- 5 539 292
- US-A1- 2010 129 181
- US-A1- 2010 256 814

## Beschreibung

Die vorliegende Erfindung betrifft eine Greifzange nach dem Oberbegriff des unabhängigen Patentanspruches 1.

Demgemäß betrifft die Erfindung insbesondere eine Greifzange, insbesondere eine pneumatisch betätigte Greifzange, wobei die Greifzange ein Gehäuse aufweist, in welchem ein vorzugsweise pneumatisch betätigbarer Linearantrieb ausgebildet ist. Die Greifzange weist ferner eine erste und eine zweite Greifbacke auf, die jeweils um eine Drehachse relativ zu dem Gehäuse verschwenkbar gelagert sind. Vorzugsweise sind die erste Greifbacke und die zweite Greifbacke mit dem Linearantrieb derart gekoppelt, dass eine mit dem Linearantrieb erzeugte Linearbewegung in eine Verschwenkbewegung jeweils der ersten und zweiten Greifbacke in einer Öffnungs- oder Schließrichtung der Greifbacken umgewandelt wird.

Derartige Greifzangen werden häufig im Zusammenhang mit Industrierobotern zum Handhaben verschiedenartiger Gegenstände/Teile/Werkstücke eingesetzt. Üblicherweise weisen solche Greifzangen mindestens zwei zangenförmig gegeneinander verschwenkbare oder längs geeigneter Führungen linear gegeneinander verschiebbare Greifbacken auf, die einen zu greifenden Gegenstand beziehungsweise ein zu greifendes Teil/Werkstück miteinander zugewandten Greiferflächen von entgegengesetzten Seiten her erfassen und einspannen.

Damit der Gegenstand beziehungsweise das Teil/Werkstück einerseits sicher zwischen den Greifbacken festgehalten und andererseits beim Einspannen nicht beschädigt wird, ist eine maximale Zuverlässigkeit der Greifzange unumgänglich. Andererseits sollen derartige Greifzangen, die gelegentlich auch als "Greifer" bezeichnet werden, eine möglichst kompakte Bauform und im Verhältnis zu einer hohen Greifkraft ein möglichst geringes Gewicht aufweisen, damit sie insbesondere auch in der Robotertechnik als Robotergreifwerkzeug vielseitig eingesetzt werden können.

Derartige Greifzangen erfüllen somit die Funktion des Erfassens und Haltens und stellen die Verbindung zwischen einem Roboterarm und dem Werkstück her. Ausschlag für eine sichere Verbindung sind dabei die Art der Wirkpaarung und die Anzahl der Kontaktebenen. Die Wirkpaarung kann über Kraft-, Form- oder Stoffpaarung erzielt werden. Beim Einsatz einer Kraftpaarung wird der Halt durch das Ausüben eines Druckes auf die Werkstückoberfläche erzeugt. Im Gegensatz hierzu erfolgt bei der Formpaarung das Halten über eine formgleiche Umschließung des Werkstückes. Diese Verfahren wird bisher von der Industrie nur im geringem Maße genutzt, wobei sich speziell bei der Mikromontage jedoch eine Änderung abzeichnet.

Eine Greifzange im Sinne der vorliegenden Erfindung beschreibt das Arbeitsorgan eines Roboters. Dazu zählen Aktoren/Effektoren, aber auch erforderliche Hilfseinrichtungen, wie Handgelenksachsen, Wechselsyteme, Fügehilfen, Schutzeinrichtungen und Sensoreinheiten.

Um die Zuverlässigkeit einer Greifzange zu optimieren, ist es üblich, diese mit Sensoren zu versehen, mit denen die richtige Lage und die Anwesenheit eines Werkstückes erfasst beziehungsweise erkannt werden kann, eine korrekte Bearbeitung des Werkstückes kontrolliert werden kann, oder entsprechende Bearbeitungsparameter geprüft werden können.

So ist beispielsweise aus der Druckschrift DE 10 2014 211 772 A1 eine Greifzange der eingangs genannten Art bekannt, wobei dieser Greifzange ein Sensor zugeordnet ist, der derart an einem Greifbackenkörper einer ersten Greifbacke angeordnet ist, dass er mit einem Greifbackenelement der ersten Greifbacke auslösbar ist. Mithilfe dieser Sensoranordnung an einer der beiden Greifbacken der Greifzange, ist es möglich, dass ein Werkstück (Greifgut) von der Greifzange gegriffen und durch das Greifen der Sensor aktiviert wird. Hierdurch kann detektiert werden, dass das Greifgut gegriffen wurde. US 4 682 805 offenbart ein weiteres Beispiel für eine Greifzange.

Diese aus dem Stand der Technik bekannte Sensorik, welche an einer der beiden Greifbacken einer Greifzange vorgesehen wird, ist jedoch bei Miniaturgreifzangen aufgrund der geringen Baugröße der dort zum Einsatz kommenden Greifbacken nicht anwendbar, sodass derartige Miniaturgreifzangen bislang ohne entsprechende Sensorik ausgerüstet waren.

Der vorliegenden Erfindung liegt die Aufgabe zugrunde, eine Lösung anzugeben, mit welcher auch bei Miniaturgreifzangen ein Greifen der Greifbacken wirksam erfasst werden kann.

Diese Aufgabe wird erfindungsgemäß dadurch gelöst, dass mindestens eine der beiden Greifbacken der Greifzangen selber als Sensor ausgebildet ist und dazu dient, ein entsprechendes Signal abzugeben, wenn von den Greifbacken der Greifzange ein Werkstück (Greifgut) gegriffen wird und/oder wenn die Greifzange in ihrem geschlossenen Zustand vorliegt. Mit anderen Worten, anstelle einer Sensoreinrichtung, die beim bisherigen Stand der Technik an einer der beiden Greifbacken der Greifzange angeordnet wird, ist erfindungsgemäß vorgesehen, mindestens eine der beiden Greifbacken selber als entsprechender Sensor auszubilden, sodass die Greifbacke beziehungsweise Greifbacken eine Doppelfunktion erfüllen: zum einen dienen die Greifbacken dazu, dass zu greifende Greifgut zu greifen, während zusätzlich hierzu zum anderen über die mindestens eine Greifbacke selber das Greifen detektiert wird.

Erfindungsgemäß ist in der ersten Greifbacke, welche als Sensor ausgebildet ist, eine resonanzfähige elektrische Schaltung (Oszillator) mit einer Spule integriert, wobei die resonanzfähige elektrische Schaltung ausgebildet ist, beim Anlegen einer Speisespannung zu schwingen und ein elektromagnetisches Feld zu generieren. Außerdem weist die resonanzfähige elektrische Schaltung einen Ferritkern auf, in welchem sich die Spule befindet, um das von dem Oszillator generierte elektromagnetische Feld zu einem Greifbereich zwischen der ersten und der zweiten Greifbacke zu richten.

Außerdem ist die zweite Greifbacke der Greifzange zumindest bereichsweise aus einem elektrisch leitfähigen Material, insbesondere metallischem Material ausgebildet, wobei das elektrisch leitfähige und insbesondere metallische Material in einem Bereich der zweiten Greifbacke vorgesehen ist, der an den Greifbereich der Greifzange angrenzt.

Durch Erfassen einer Beeinflussung der Oszillatorspannung ist es somit möglich, eine Aussage auf eine Position der Greifbacken relativ zueinander zu treffen. Erfindungsgemäß ist somit ferner eine entsprechende Auswerteeinheit vorgesehen, welche ausgebildet ist, eine Beeinflussung der Oszillatorspannung zu erfassen und basierend hierauf ein Signal auszugeben, welches im Hinblick auf eine Position der Greifbacken relativ zueinander indikativ ist.

Sobald bei dieser exemplarischen Ausführungsform an dem in der ersten Greifbacke integrierten Oszillator eine Speisespannung angelegt wird, beginnt der Oszillator zu schwingen. Das dabei entstehende elektromagnetische Feld wird mittels des Ferritkerns, in welchem sich die Spule des Schwingkreises des Oszillators befindet, nach vorne zur aktiven Fläche der ersten Greifbacke gerichtet, die an den Greifbereich der Greifzange angrenzt. Wenn sich nun die zweite Greifbacke der ersten Greifbacke annähert, wird dem Schwingkreis Energie entzogen, worauf die Oszillatorspannung kleiner wird. Ein optional nachgeschalteter Komparator detektiert die Abnahme der Oszillatorspannung und steuert beim eingestellten Schaltabstand beziehungsweise Schwingungspegel einen Ausgangs-Schaltverstärker an.

Außerdem ist die erste Greifbacke der Greifzange als Messelektrode und die zweite Greifbacke der Greifzange als Gegenelektrode ausgebildet, wobei die beiden Greifbacken zusammen einen elektrischen Kondensator bilden. Mithilfe einer Auswerteeinheit wird die Kapazität beziehungsweise eine Kapazitätsänderung dieses so gebildeten elektrischen Kondensators erfasst, was wiederum einen Rückschluss auf die Position der Greifbacken relativ zueinander, aber auch einen Rückschluss auf ein zwischen den Greifbacken gegriffenes Werkstück (Greifgut) liefert. Dieser Anordnung liegt die Erkenntnis zugrunde, dass sich die Kapazität des aufgrund der Messelektrode und der Gegenelektrode gebildeten elektrischen Kondensators ändert, wenn ein Greifgut in den Greifbereich der Greifzange gebracht wird. Andererseits erfolgt eine Kapazitätsänderung auch dann, wenn sich die Position der beiden Greifbacken relativ zueinander verändert.

In diesem Zusammenhang ist es auch denkbar, sogenannte Schirmelektroden in der ersten Greifbacke auszubilden, um einen inhomogenen Randbereich des elektrischen Feldes von der Messelektrode abzuschirmen, sodass sich zwischen der als Messelektrode dienenden ersten Greifbacke und der beispielsweise elektrisch geerdeten und als Gegenelektrode ausgebildeten zweiten Greifbacke ein annähernd paralleles elektrisches Feld mit der bekannten Charakteristik eines idealen Plattenkondensators bildet. Auf diese Weise sind kleine Kapazitätsänderung besser detektierbar.

Vorzugsweise sind die Greifbacken der Greifzange sowohl als induktiver als auch als kapazitiver Sensor ausgebildet, um unabhängig von dem Material des Werkstückes (Greifgutes) die Position der Greifbacken relativ zueinander und ein von den Greifbacken gegriffenes Werkstück detektieren zu können.

Die erfindungsgemäße Lösung ist nicht auf die zuvor beschriebenen induktiven und/oder kapazitiven Messeinrichtungen beschränkt. Vielmehr ist es zusätzlich hierzu denkbar, wenn mindestens ein Bereich der ersten Greifbacke und/oder der zweiten Greifbacke als resistiver Sensorbereich, induktiver Sensorbereich, Magnetfeldsensorbereich, kapazitiver Sensorbereich und/oder piezoelektrischer Sensorbereich ausgebildet ist.

Das Wirkprinzip eines resistiven Sensorbereiches ist, sodass sich in Abhängigkeit von einer Messgröße (Länge, Temperatur, etc.) der Ohm'sche Widerstand der als Sensor ausgebildeten Greifbacke ändert. Diese Widerstandsänderung führt zu einem veränderten Spannungsabfall an dem Sensorbereich, der dann beispielsweise mit einem einfachen Spannungsteiler oder einer Brückenschaltung (höhere Messgenauigkeit) erfasst werden kann.

Ein induktiver Sensorbereich beruht auf elektromagnetischer Induktion, der Dämpfung oder der Frequenzänderung eines Schwingkreises beziehungsweise einer Spule, der beziehungsweise die in einer der beiden Greifbacken der Greifzange integriert ist.

Ein Magnetfeldsensorbereich beruht auf Wirkungen des magnetischen Feldes in hart- oder weichmagnetischen Werkstoffen, Halbleitern, ultradünnen Schichten, Lichtleitern, Flüssigkeiten oder deren Oberflächen. Diese Wirkungen umfassen insbesondere galvanomagnetische Effekte (Hall-Effekt) und magneto-resistive (MR) Effekte.

Die Wirkung eines in einer der Greifbacken ausgebildeten kapazitiven Sensorbereichen beruht auf einer Änderung der Kapazität eines durch die beiden Greifbacken gebildeten Kondensators.

Die erste und/oder zweite Greifbacke mit einem piezoelektrischen Sensorbereich auszubilden ermöglicht es, diesen Sensorbereich - basierend auf dem piezoelektrischen Effekt - als Kraftaufnehmer, Drucksensor oder Beschleunigungsaufnehmer auszuführen.

Gemäß einem weiteren Aspekt der vorliegenden Erfindung weist die Greifzange ein Synchronisationselement auf. Das Synchronisationselement ist derart ausgebildet, dass die erste Greifbacke und die zweite Greifbacke bezüglich einer Mitten-Längsachse der Greifzange selbst zentriert schließbar sind. Die Mitten-Längsachse der Greifzange erstreckt sich dabei lateral mittig zwischen der ersten Greifbacke und der zweiten Greifbacke im Greifbereich der Greifzange.

Hierdurch wird erreicht, dass die Greifbacken beim Schließen der Greifzange selbst zentriert geschlossen werden.

Ein derartiges Synchronisationselement ermöglicht es insbesondere, dass Werkstücke, die gegriffen werden sollen, nicht genau zentral entlang der Mitten-Längsachse der Greifzange gegriffen werden müssen, sondern auch abweichend von der Mitten-Längsachse der Greifzange gegriffen werden können. Die Kraftausübung auf ein solches Werkstück (Greifgut) ist in diesem Fall nicht symmetrisch. Trotzdem wird sichergestellt, dass die Greifbacken hierdurch nicht gegeneinander verschoben werden.

Gemäß einer denkbaren Realisierung weist das Synchronisationselement ein kreiszylinderförmiges Teil auf, welches entlang einer Längsachse parallel zu Drehachsen der Greifbacken angeordnet ist. Ein derartiges kreiszylinderförmiges Teil ermöglicht es somit, dass die Greifbacken symmetrisch bezüglich der Mitten-Längsachse der Greifzange geschlossen werden können.

Das kreiszylinderförmige Teil ist so vorzugsweise derart angeordnet, dass es die Mitten-Längsachse der Greifzange senkrecht schneidet. Hierdurch kann eine Selbstzentrierung erreicht werden und gleichzeitig eine kompakte Bauform der Greifzange realisiert werden.

Gemäß einer weiteren Realisierung der erfindungsgemäßen Greifzange ist vorgesehen, dass in der ersten Greifbacke ein metallischer, vorzugsweise magnetischer oder magnetisierbarer Bereich ausgebildet ist. Andererseits ist gegenüberliegend von diesem metallischen Bereich in der zweiten Greifbacke ein Sensorbereich integral ausgebildet, wobei dieser Sensorbereich ausgebildet ist, ein Signal auszugeben, vorzugsweise ein elektrisches Signal auszugeben, wenn der metallische Bereich der ersten Greifbacke den Sensorbereich der zweiten Greifbacke berührt oder eine gewisse vorbestimmte oder vorbestimmbare Distanz zu dem Sensorbereich unterschreitet.

In vorteilhafter Weise kann hierdurch detektiert werden, dass ein Werkstück (Greifgut) gegriffen wurde, wenn die erste Greifbacke und die zweite Greifbacke das zu greifende Werkstück (Greifgut) berühren. Herbei ist der metallische Bereich derart ausgebildet, dass er den Sensorbereich genau dann berührt, wenn die erste Greifbacke zum Anliegen kommt.

Der Sensorbereich ist vorzugsweise ausgebildet, in einem binären Modus betrieben zu werden. Das bedeutet, dass der Sensorbereich kein Signal aussendet, solange er nicht in Kontakt mit dem metallischen Bereich der ersten Sensorbacke ist, und ein Signal aussendet, wenn er in Kontakt mit dem metallischen Bereich der ersten Greifbacke ist. Somit kann sichergestellt werden, dass der Sensorbereich nur dann auslöst, wenn ein Greifgut gegriffen wurde.

Gemäß einem weiteren Aspekt der vorliegenden Erfindung ist der Greifzange eine Steuereinheit zugeordnet. Die Steuereinheit ist ausgelegt, ein Greifen der Greifzange festzustellen, wenn ein Signal von der als Sensor ausgebildeten ersten und/oder zweiten Greifbacke an die Steuereinheit übermittelt wird. Hierzu ist die als Sensor ausgebildete erste und/oder zweite Greifbacke vorzugsweise mit der Steuereinheit verbunden. Die Steuereinheit ist vorzugsweise ausgebildet, die Kraft, die von den Greifbacken ausgeübt wird, gleichmäßig aufrecht zu erhalten, wenn detektiert wurde, dass die Greifzange ein Werkstück gegriffen hat.

Hierdurch kann in vorteilhafter Weise erreicht werden, dass, beispielsweise zur weiteren Verarbeitung oder zum weiteren Betrieb der Greifzange, detektiert wird, ob ein Werkstück gegriffen wurde. Außerdem kann sichergestellt werden, dass das Werkstück durch die Greifzange nicht beschädigt wird.

Die erfindungsgemäße Lösung eignet sich insbesondere für Miniaturgreifzangen, bei denen es aufgrund der geringen Baugröße der Greifbacken nicht möglich ist, an einer der Greifbacken die aus dem bisherigen Stand der Technik bekannten Sensoreinrichtung von außen anzubringen.

Die erfindungsgemäße Lösung bietet allerdings auch den weiteren Vorteil, dass durch die Ausbildung der Greifbacken selber als Sensoreinrichtung das Gewicht der Greifbacken reduziert werden kann, was wiederum einen Vorteil auf die Öffnungs- und Schließgeschwindigkeit der Greifzange mit sich führt.

In einer bevorzugten Realisierung der erfindungsgemäßen Greifzange ist vorgesehen, dass die beiden Greifbacken hinsichtlich einer Mitten-Längsachse der Greifzange spiegelsymmetrisch ausgebildet sind. Hierbei ist es insbesondere denkbar, dass die Greifbacken an die Kontur des zu greifenden Gegenstandes (Werkstück/Greifgut) angepasst sind und beispielsweise eine große Berührungsfläche oder gar eine formschüssige Verbindung von Greifbacke und Gegenstand ermöglichen, wodurch unter Umständen die Anpresskraft klein gehalten werden kann, was zum Greifen von leicht zerbrechlichen Gegenständen von Vorteil ist.

In bevorzugten Weiterbildungen der erfindungsgemäßen Lösung ist in dem Gehäuse der Greifzange ein vorzugsweise pneumatisch betätigbarer Linearantrieb ausgebildet, über den eine Verschwenkbewegung oder eine Linearbewegung der Greifbacken relativ zueinander realisiert werden kann. Der Linearantrieb weist einen durch ein vorzugsweise pneumatisches Druckmittel beaufschlagbaren Arbeitsraum und einen in dem Arbeitsraum verschiebbaren und durch Druckmittelbeaufschlagung bewegbaren Kolben auf, wobei der Kolben mit der ersten und der zweiten Greifbacke gekoppelt oder koppelbar ist.

Alternativ hierzu ist es auch denkbar, dass der Linearantrieb einen durch ein vorzugsweise pneumatisches Druckmittel beaufschlagbaren Arbeitsraum aufweist, welcher zumindest teilweise elastisch ausgebildet ist, sodass durch Druckmittelbeaufschlagung eine Ausdehnung des Arbeitsraumes zumindest in der Längsrichtung der Greifzange erfolgt. Diese in Längsrichtung der Greifzange stattfindende Ausdehnung des Arbeitsraumes bei Druckmittelbeaufschlagung des Arbeitsraumes stellt eine Linearbewegung dar, die vorzugsweise in die beiden Greifbacken eingeleitet wird.

Die erfindungsgemäße Lösung ist jedoch keinesfalls auf eine pneumatisch betätigte Greifzange beschränkt. Vielmehr kommen selbstverständlich auch hydraulische oder elektrische Linearantriebe in Frage.

Auch ist die Erfindung nicht auf Greifzangen beschränkt, bei denen die Greifbacken relativ zueinander verschwenkt werden. Vielmehr soll mit der vorliegenden Erfindung auch solche Greifzangen abgedeckt werden, bei denen die Greifbacken linear zueinander verschoben werden beziehungsweise verschiebbar sind.

## Patentansprüche

1. Greifzange, insbesondere pneumatisch betätigte Greifzange, wobei die Greifzange folgendes aufweist:
- ein Gehäuse, in welchem ein vorzugsweise pneumatisch betätigbarer Linearantrieb ausgebildet ist; und
- eine erste und eine zweite Greifbacke, die jeweils um eine Drehachse relativ zu dem Gehäuse verschwenkbar gelagert sind,
wobei mindestens eine der beiden Greifbacken als Sensor ausgebildet ist und dazu dient, ein entsprechendes Signal abzugeben, wenn von den Greifbacken ein Werkstück gegriffen wird und/oder wenn die Greifzange in ihrem geschlossenen Zustand vorliegt,
wobei in der ersten Greifbacke ein Oszillator in Gestalt einer resonanzfähigen elektrischen Schaltung mit einer Spule integriert ist, wobei die resonanzfähige elektrische Schaltung ausgebildet ist, beim Anlegen einer Speisespannung zu schwingen und ein elektromagnetisches Feld zu generieren, wobei die zweite Greifbacke zumindest bereichsweise auf einem elektrisch leitfähigen Material, insbesondere metallischem Material, ausgebildet ist, wobei das elektrisch leitfähige und insbesondere metallische Material in einem Bereich der zweiten Greifbacke vorgesehen ist, der an den Greifbereich zwischen der ersten und der zweiten Greifbacke angrenzt, und wobei ferner eine Auswerteeinheit vorgesehen ist, welche ausgebildet ist, eine Beeinflussung der Oszillatorspannung zu erfassen und basierend hierauf ein Signal auszugeben, welches im Hinblick auf eine Position der Greifbacken relativ zueinander indikativ ist, und wobei die erste Greifbacke als Messelektrode und die zweite Greifbacke als Gegenelektrode ausgebildet ist, welche zusammen einen elektrischen Kondensator bilden,
**dadurch gekennzeichnet, dass** die resonanzfähige elektrische Schaltung einen Ferritkern aufweist, in welchem sich die Spule befindet, um das elektromagnetische Feld zu einem Greifbereich zwischen der ersten und der zweiten Greifbacke zu richten.

2. Greifzange nach Anspruch 1,
wobei ferner eine Auswerteeinheit vorgesehen ist, welche ausgebildet ist, eine Beeinflussung des elektrischen Feldes in dem Greifbereich zwischen der ersten und der zweiten Greifbacke zu erfassen und basierend hierauf ein Signal auszugeben, welches im Hinblick auf eine Position den Greifbacken relativ zueinander und/oder im Hinblick auf ein von den Greifbacken gegriffenes Werkstück indikativ ist.

3. Greifzange nach Anspruch 1 oder 2,
wobei mindestens ein Bereich der ersten und/oder zweiten Greifbacke als resistiver Sensorbereich, induktiver Sensorbereich, Magnetfeldsensorbereich, kapazitiver Sensorbereich und/oder piezoelektrischer Sensorbereich ausgebildet ist.

4. Greifzange nach einem der Ansprüche 1 bis 3,
wobei ferner eine Steuereinheit vorgesehen ist, welche ausgebildet ist, ein Greifen der Greifzange zu detektieren, wenn ein Signal von der als Sensor ausgebildeten ersten und/oder zweiten Greifbacke an die Steuereinheit übermittelt wird, und wobei die Steuereinheit vorzugsweise ausgebildet ist, eine Kraft, die von den Greifbacken ausgeübt wird, gleichmäßig aufrecht zu erhalten, wenn detektiert wurde, dass die Greifzange ein Werkstück gegriffen hat.

5. Greifzange nach einem der Ansprüche 1 bis 4,
wobei die Greifzange ein Synchronisationselement aufweist, welches derart ausgebildet ist, dass die erste Greifbacke einerseits und die zweite Greifbacke andererseits in Bezug zu einer Mitten-Längsachse der Greifzange, die sich lateral mittig zwischen der ersten Greifbacke einerseits und der zweiten Greifbacke andererseits erstreckt, selbst-zentriert schließbar ist.

6. Greifzange nach Anspruch 5,
wobei das Synchronisationselement ein kreiszylinderförmiges Element aufweist, welches entlang einer Längsachse parallel zu den Drehachsen der Greifbacken angeordnet ist.

7. Greifzange nach einem der Ansprüche 1 bis 6,
wobei die erste Greifbacke und die zweite Greifbacke hinsichtlich einer Mitten-Längsachse der Greifzange spiegelsymmetrisch ausgebildet sind.

8. Greifzange nach einem der Ansprüche 1 bis 7,
wobei in dem Gehäuse der Greifzange ein Linearantrieb ausgebildet ist, welcher einen durch ein vorzugsweise pneumatisches Druckmittel beaufschlagbaren Arbeitsraum und einen in dem Arbeitsraum verschiebbaren und durch Druckmittelbeaufschlagung bewegbaren Kolben aufweist, wobei der Kolben mit der ersten Greifbacke und der zweiten Greifbacke gekoppelt oder koppelbar ist.

9. Greifzange nach einem der Ansprüche 1 bis 8,
wobei in dem Gehäuse der Greifzange ein Linearantrieb ausgebildet ist, welcher einen durch ein vorzugsweise pneumatisches Druckmittel beaufschlagbaren Arbeitsraum aufweist, welcher zumindest teilweise elastisch ausgebildet ist, sodass durch Druckmittelbeaufschlagung eine Ausdehnung des Arbeitsraumes in Längsrichtung der Greifzange erfolgt.

10. Greifzange nach einem der Ansprüche 1 bis 9,
wobei mindestens ein Rückstellelement vorgesehen ist, welches mit mindestens einer der beiden Greifbacken derart zusammenwirkt, dass die mindestens eine Greifbacke in ihre Schließ- oder Öffnungsrichtung bewegt wird, wenn keine Linearkraft durch den Linearantrieb an die Greifbacken eingeleitet wird.

## Claims

1. Gripping tongs, in particular pneumatically operated gripping tongs, wherein the gripping tongs comprise the following:
- a housing in which a preferably pneumatically operable linear drive is formed; and
- a first and a second gripper jaw, each of which are pivotably mounted about an axis of rotation relative to the housing,
wherein at least one of the two gripper jaws is designed as a sensor and serves to emit a corresponding signal when the gripper jaws have gripped a workpiece and/or when the gripping tongs are in their closed state,
wherein an oscillator in the form of an electrical circuit with a coil, which is capable of resonating, is integrated into the first gripper jaw, wherein the electrical circuit capable of resonating is designed to vibrate and generate an electromagnetic field upon a supply voltage being applied, wherein at least part of the second gripper jaw is formed from an electrically conductive material, in particular a metallic material, wherein the electrically conductive and in particular metallic material is provided in an area of the second gripper jaw adjacent to the gripping area between the first and the second gripper jaw, and
wherein an evaluation unit is further provided which is designed to detect an influence on the oscillator voltage and emit a signal based thereon which is indicative of a position of the gripper jaws relative to each other, and wherein the first gripper jaw is designed as a measuring electrode and the second gripper jaw as a counter electrode which together form an electrical capacitor, **characterized in that** the electrical circuit capable of resonating has a ferrite core in which the coil is located in order to direct the electromagnetic field to a gripping area between the first and the second gripper jaw.

2. The gripping tongs according to claim 1,
wherein an evaluation unit is further provided which is designed to detect an influence on the electrical field in the gripping area between the first and the second gripper jaw and emit a signal based thereon which is indicative of a position of the gripper jaws relative to each other and/or indicative of a workpiece gripped between the gripper jaws.

3. The gripping tongs according to claim 1 or 2,
wherein at least one area of the first and/or second gripper jaw is designed as a resistive sensor area, inductive sensor area, magnetic field sensor area, capacitive sensor area and/or piezoelectric sensor area.

4. The gripping tongs according to one of claims 1 to 3,
wherein a control unit is further provided which is designed to detect a gripping by the gripping tongs when a signal is transmitted to the control unit from the first and/or second gripper jaw designed as a sensor, and wherein the control unit is preferably designed to consistently maintain a force exerted by the gripper jaws upon the detection of a workpiece being gripped by the gripping tongs.

5. The gripping tongs according to one of claims 1 to 4,
wherein the gripping tongs comprise a synchronizing element designed such that the first gripper jaw on the one side and the second gripper jaw on the other side can close in self-centering manner with respect to a central longitudinal axis of the gripping tongs extending laterally centrally between the first gripper jaw on the one side and the second gripper jaw on the other side.

6. The gripping tongs according to claim 5,
wherein the synchronizing element comprises a circular cylindrical element arranged along a longitudinal axis parallel to the rotational axes of the gripper jaws.

7. The gripping tongs according to one of claims 1 to 6,
wherein the first gripper jaw and the second gripper jaw are of mirror-symmetrical design with respect to a central longitudinal axis of the gripping tongs.

8. The gripping tongs according to one of claims 1 to 7,
wherein a linear drive is formed in the housing of the gripping tongs which has a working chamber able to be pressurized by a preferably pneumatic pressurizing medium and a piston displaceable in the working chamber and movable upon the pressurizing of the pressurizing medium, wherein the piston is or is able to be coupled to the first gripper jaw and the second gripper jaw.

9. The gripping tongs according to one of claims 1 to 8,
wherein a linear drive is formed in the housing of the gripping tongs which has a working chamber of at least to some extent elastic design which is able to be pressurized by a preferably pneumatic pressurizing medium such that the working chamber expands in the longitudinal direction of the gripping tongs as a result of the pressurizing of the pressurizing medium.

10. The gripping tongs according to one of claims 1 to 9,
wherein at least one restoring element is provided which interacts with at least one of the two gripper jaws such that the at least one gripper jaw is moved in its closing or opening direction when there is no linear force being introduced to the gripper jaws via the linear drive.

## Revendications

1. Pince de préhension, en particulier pince de préhension actionnée par voie pneumatique, la pince de préhension comprenant :
- un boîtier dans lequel est réalisé un entraînement linéaire de préférence à actionnement pneumatique ; et
- une première et une deuxième mâchoire de préhension, qui sont montées chacune de manière à pouvoir pivoter par rapport au boîtier autour d'un axe de rotation,
dans laquelle
l'une au moins des deux mâchoires de préhension est réalisée sous forme de capteur et sert à émettre un signal correspondant lorsqu'une pièce est saisie par les mâchoires de préhension et/ou lorsque la pince de préhension se trouve dans son état fermé,
un oscillateur sous la forme d'un circuit électrique résonant présentant une bobine est intégré dans la première mâchoire de préhension,
le circuit électrique résonant est réalisé pour osciller et générer un champ électromagnétique lorsqu'une tension d'alimentation est appliquée,
la deuxième mâchoire est réalisée au moins localement sur un matériau électriquement conducteur, en particulier sur un matériau métallique,
le matériau électriquement conducteur et en particulier métallique est prévu dans une zone de la deuxième mâchoire de préhension qui est adjacente à la zone de préhension entre la première et la deuxième mâchoire de préhension, et
il est en outre prévu une unité d'évaluation qui est réalisée pour détecter une influence de la tension de l'oscillateur et, en se basant sur cette influence, pour émettre un signal qui est indicatif d'une position des mâchoires de préhension l'une par rapport à l'autre, et
la première mâchoire de préhension est réalisée sous forme d'électrode de mesure, et la deuxième mâchoire de préhension est réalisée sous forme de contre-électrode, qui forment ensemble un condensateur électrique,
**caractérisée en ce que** le circuit électrique résonant comprend un noyau de ferrite dans lequel se trouve la bobine, afin de diriger le champ électromagnétique vers une zone de préhension entre la première et la deuxième mâchoire de préhension.

2. Pince de préhension selon la revendication 1,
dans laquelle il est en outre prévu une unité d'évaluation qui est réalisée pour détecter une influence du champ électrique dans la zone de préhension entre la première et la deuxième mâchoire de préhension et, en se basant sur cette influence, pour émettre un signal qui est indicatif d'une position des mâchoires de préhension l'une par rapport à l'autre et/ou d'une pièce saisie par les mâchoires de préhension.

3. Pince de préhension selon la revendication 1 ou 2,
dans laquelle au moins une zone de la première et/ou de la deuxième mâchoire de préhension est réalisée sous la forme d'une zone de détection résistive, d'une zone de détection inductive, d'une zone de détection de champ magnétique, d'une zone de détection capacitive et/ou d'une zone de détection piézoélectrique.

4. Pince de préhension selon l'une des revendications 1 à 3,
dans laquelle il est en outre prévu une unité de commande qui est réalisée pour détecter une préhension de la pince de préhension lorsqu'un signal provenant de la première et/ou de la deuxième mâchoire de préhension réalisée sous forme de capteur est transmis à l'unité de commande, et
l'unité de commande est de préférence réalisée pour maintenir uniformément une force, exercée par les mâchoires de préhension, lorsqu'il a été détecté que la pince de préhension a saisi une pièce.

5. Pince de préhension selon l'une des revendications 1 à 4,
dans laquelle la pince de préhension comprend un élément de synchronisation réalisé de telle sorte que la première mâchoire de préhension, d'une part, et la deuxième mâchoire de préhension, d'autre part, peuvent être fermées de manière autocentrée par rapport à un axe longitudinal médian de la pince de préhension qui s'étend latéralement au centre entre la première mâchoire de préhension, d'une part, et la deuxième mâchoire de préhension, d'autre part.

6. Pince de préhension selon la revendication 5,
dans laquelle l'élément de synchronisation comprend un élément de forme cylindrique circulaire qui est disposé le long d'un axe longitudinal parallèle aux axes de rotation des mâchoires de préhension.

7. Pince de préhension selon l'une des revendications 1 à 6,
dans laquelle la première mâchoire de préhension et la deuxième mâchoire de préhension sont symétriques par rapport à un axe longitudinal médian de la pince de préhension.

8. Pince de préhension selon l'une des revendications 1 à 7,
dans laquelle un entraînement linéaire est réalisé dans le boîtier de la pince de préhension et comprend une chambre de travail pouvant être sollicitée par un fluide sous pression, de préférence pneumatique, et un piston mobile en translation dans la chambre de travail et pouvant être déplacé par la sollicitation en fluide sous pression, le piston étant couplé ou pouvant être couplé à la première mâchoire de préhension et à la deuxième mâchoire de préhension.

9. Pince de préhension selon l'une des revendications 1 à 8,
dans laquelle un entraînement linéaire est réalisé dans le boîtier de la pince de préhension et comprend une chambre de travail pouvant être sollicitée par un fluide sous pression, de préférence pneumatique, laquelle est au moins partiellement élastique, de sorte que la sollicitation en fluide sous pression provoque une extension de la chambre de travail dans la direction longitudinale de la pince de préhension.

10. Pince de préhension selon l'une des revendications 1 à 9,
dans laquelle il est prévu au moins un élément de rappel qui coopère avec l'une au moins des deux mâchoires de préhension de telle sorte que ladite au moins une mâchoire de préhension est déplacée dans sa direction de fermeture ou d'ouverture lorsqu'aucune force linéaire n'est appliquée aux mâchoires de préhension par l'entraînement linéaire.
